Europäisches Patentamt

European Patent Office

Office européen des brevets

(19)

(11) Veröffentlichungsnummer: **0 199 139**
**B1**

(12) **EUROPÄISCHE PATENTSCHRIFT**

(45) Veröffentlichungstag der Patentschrift: **02.05.90**

(51) Int. Cl.⁵: **C 01 B 25/41, B 01 J 19/26**

(21) Anmeldenummer: **86104317.2**

(22) Anmeldetag: **27.03.86**

(54) Verfahren und Anlage zur Herstellung von hohlkugelförmigen Alkalipolyphosphaten mit niedrigem Schüttgewicht.

(30) Priorität: **17.04.85 DE 3513743**

(43) Veröffentlichungstag der Anmeldung:
**29.10.86 Patentblatt 86/44**

(45) Bekanntmachung des Hinweises auf die Patenterteilung:
**02.05.90 Patentblatt 90/18**

(84) Benannte Vertragsstaaten:
**BE DE FR GB IT NL SE**

(56) Entgegenhaltungen:
**EP-A-0 071 040**
**FR-A-2 084 424**
**US-A-2 986 449**
**US-A-3 378 341**

(73) Patentinhaber: **HOECHST AKTIENGESELLSCHAFT**
**Postfach 80 03 20**
**D-6230 Frankfurt am Main 80 (DE)**

(72) Erfinder: **Kowalski, Werner**
**Am Ginsterberg 7**
**D-5354 Weilerswist (DE)**
Erfinder: **Haas, Hans, Dr.**
**Bünnagelring 17**
**D-5357 Swissttal (DE)**
Erfinder: **Dahmen, Theo**
**Von-Westerburg-Strasse 24**
**D-5040 Brühl (DE)**
Erfinder: **Erpenbach, Markus**
**Oberbuschweg 22**
**D-5000 Köln (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von hohlkugelförmigen Alkalipolyphosphaten mit niedrigem Schüttgewicht durch Versprühen von Alkaliorthophosphatlösungen mittels Einstoffdüsen bei Vordrucken der Alkaliphosphatlösungen von 6 bis 40 bar in einem Sprühturm durch eine Flammenzone sowie eine Anlage zur Durchführung des Verfahrens.

Aus der US—PS—4 501 639 ist ein Verfahren zur Herstellung von Alkalipolyphosphaten aus Alkaliphosphatlösungen- oder suspensionen durch Versprühen der Ausgangsprodukte in einem Sprühturm durch eine Flammenzone bekannt, wobei das Versprühen mittels mehrer Einstoffdüsen bei Vordrucken der Alkaliphosphatlösungen oder -suspensionen von 6 bis 66 bar erfolgt. Dabei werden Alkalipolyphosphate mit Schüttgewichten zwischen 620 und 720 g/l erhalten.

Zur Herstellung von Alkalipolyphosphaten mit niedrigem Schüttgewicht versprüht man Alkaliphosphatlösungen zusammen mit Blähmitteln, d.h. mit Substanzen, welche unter den Sprühbedingungen eine Gasphase freisetzen und damit die Bildung von Hohlkugeln begünstigen. Als derartige Substanzen sind beispielsweise Alkalisalze von Phosphorsäuren mit einer elektropositiven Wertigkeit des Phosphors von weniger als 5 (vergl. US—PS 2 986 449), Lösungen von Alkalicarbonaten oder -bicarbonaten (vergl. US—PS 3 378 341) und Harnstoff beschrieben. Dabei werden Alkalipolyphosphate mit einem Schüttgewicht von 250 bis 600 g/l erhalten.

Qualitätsmerkmale für als Waschmittelkomponente verwendete Alkalitripolyphosphate sind der Gehalt an $Me^I_5P_3O_{10}$ sowie der Anteil an Hoch- bzw. Tieftemperaturform. Daneben spielt aber je nach Verwendungsart der Alkalitripolyphosphate bei der Waschmittelherstellung ihr Schüttgewicht eine bedeutende Rolle, wobei das Schüttgewicht nicht nur ein praktisches Maß für die Oberfläche ist, sondern ihm beispielsweise auch eine erhebliche Bedeutung für den Füllungsgrad der Pakete, in denen das Waschpulver zum Verkauf gebracht wird, zukommt.

Es ist daher Aufgabe der vorliegenden Erfindung ein Verfahren zur Herstellung von Alkalipolyphosphaten durch Versprühen von Alkaliorthophosphatlösungen mittels Einstoffdüsen bei Vordrucken der Alkaliphosphatlösungen von 6 bis 40 bar in einem Sprühturm und eine Anlage zu seiner Durchführung anzugeben, mit welchen Alkalipolyphosphate mit einem Schüttgewicht von weniger als 350 g/l und hohlkugelförmiger Kornstruktur erhalten werden. Das wird erfindungsgemäß dadurch erreicht, daß man ein unter einem höheren Druck als die Alkaliphosphatlösungen stehendes permanentes Gas in feinperliger Form in eine mit den Alkaliphosphatlösungen gefüllte und mit den Einstoffdüsen strömungsmäßig verbundene Verwirbelungszone preßt.

Das Verfahren gemäß der Erfindung kann wahlweise auch noch dadurch ausgestaltet sein, daß

a) man als permanentes Gas Preßluft verwendet;

b) man als permanentes Gas Kohlendioxid verwendet;

c) man als permanentes Gas Stickstoff verwendet;

d) der Druck des permanenten Gases mindestens 20% höher als der Vordruck der Alkaliphosphatlösungen ist;

e) man 1,5 bis 40 Nm³, vorzugsweise 2 bis 6 Nm³, permanentes Gas pro m³ Alkaliphosphatlösung anwendet.

Eine Anlage zur Durchführung des genannten Verfahrens, welche aus einem mit einem Deckel verschlossenen, zylindrischen Sprühturm besteht, wobei der Deckel mittig von einem mit einer Versprüheinrichtung verbundenen Lösungszuführungsrohr sowie von einer Brennereinrichtung durchdrungen ist, kann dadurch gekennzeichnet, sein, daß die Versprüheinrichtung aus einem Lösungseintrittsrohr und einem daran befestigten Konus besteht, wobei in den unteren Teil des Konus mittig ein kegelförmiger Verdrängerkörper unter Ausbildung einer Verwirbelungskammer eingesetzt ist; daß der Konus nach unten hin durch eine Kreisplatte verschlossen ist; daß in die Kreisplatte im Bereich der Verwirbelungskammer mehrere Zuleitungen mit an ihren entgegengesetzten Enden angeordneten Einstoffdüsen unter Ausbildung einer Bündeldüse eingesetzt sind; und daß in die Verwirbelungskammer tangential ein Druckgaszuführungsrohr einmündet.

Die genannte Anlage kann weiterhin wahlweise auch noch dadurch weitergebildet sein, daß

f) jede Einstoffdüse 5 bis 9, vorzugsweise 7, Bohrungen aufweist;

g) jede Bohrung einen Durchmesser von 0,5 bis 4 mm aufweist;

h) die Bündeldüse aus 6 bis 14 Einstoffdüsen besteht;

i) das Druckgaszuführungsrohr einen Durchmesser von 0,3 bis 4 mm aufweist.

Beim Verfahren gemäß der Erfindung wird durch das Einpressen des permanenten Gases in die Verwirbelungszone bewirkt, daß aus den Austrittsöffnungen der Düsen ein schaumartiges Gas/Flüssigkeitsgemisch austritt. Dieses schaumartige Gemisch gelangt unmittelbar in die Flammenzone des Sprühturmes, wobei das Gemisch unter Verdampfen des Wassers in Alkalipolyphosphate mit einem Schüttgewichten von weniger als 350 g/l umgewandelt wird.

Beim erfindungsgemäßen Verfahren läßt sich bei vorgegebenem Durchmesser der Bohrungen in den Einstoffdüsen und vorgegebenem Vordruck der Alkaliphosphatlösungen das Schüttgewicht des Sprühproduktes durch die Menge des permanenten Gases einstellen, wobei eine höhere Gasmenge je m³ Alkaliphosphatlösung ein leichteres Produkt liefert.

Bei der Anlage zur Durchführung des Verfahrens gemäß der Erfindung sind die Einstoffdüsen zur Bildung der Bündeldüse vorzugsweise kreissymmetrisch angeordnet.

In der beigefügten Zeichnung ist eine Anlage zur Durchführung des erfindungsgemäßen Verfahrens schematisch und teilweise im Schnitt dargestellt. Dabei zeigen:

Figur 1 eine teilweise Seitenansicht eines Sprühturmes,

Figur 2 eine Ansicht einer Versprüheinrichtung von unten her,

Figur 3 eine Seitenansicht einer Versprüheinrichtung.

Ein zylindrischer Sprühturm 1 ist mit einem konischen Deckel 2 verschlossen. Der konische Deckel 2 ist zentrisch von einem Lösungszuführungsrohr 5 durchdrungen, an dessen Ende im Inneren des Sprühturmes 1 eine Versprüheinrichtung 6 angeordnet ist, während sich im Lösungszuführungsrohr 5 außerhalb des Sprühturmes 1 mindestens eine Druckerhöhungspumpe 7 befindet. Der Deckel 2 ist weiterhin von mehreren Brennern 11 durchdrungen.

Die Versprüheinrichtung 6 besteht aus einem Lösungseintrittsrohr 8, an welchem ein Konus 9 befestigt ist. Im unteren Teil des Konus 9 ist mittig ein kegelförmiger Verdrängerkörper 10 unter Ausbildung einer Verwirbelungskammer 12 angeordnet. Der Konus 9 ist nach unten hin durch eine Kreisplatte 13 abgeschlossen, in welche im Bereich der Verwirbelungskammer 12 mehrere Zuleitungen 14 mit an ihren entgegengesetzten Enden angeordneten Einstoffdüsen 15 unter Ausbildung einer Bündeldüse 3 eingesetzt sind. Weiterhin mündet in die Verwirbelungskammer 12 tangential ein Druckgaszuführungsrohr 4 ein.

### Beispiel 1 (nach dem Stand der Technik)

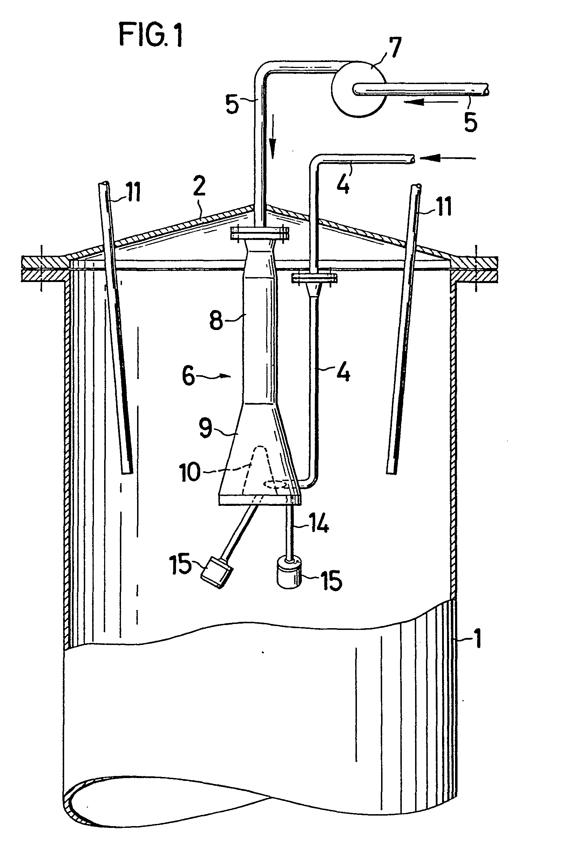

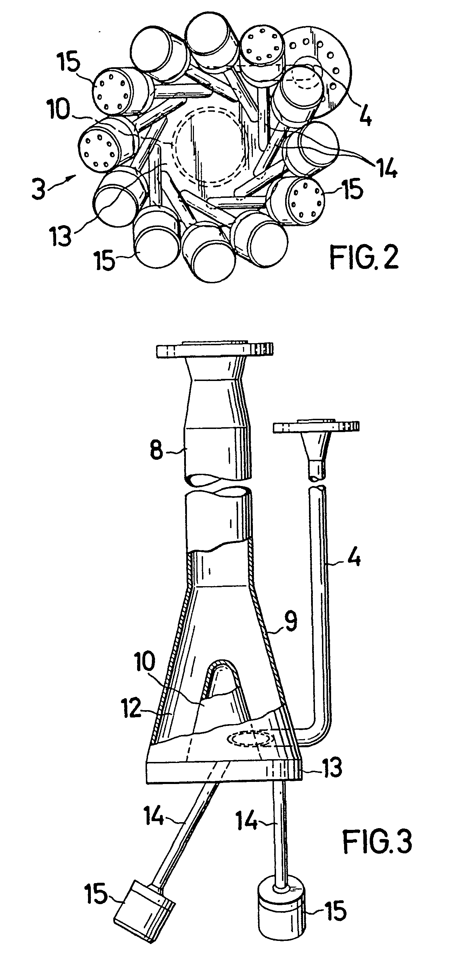

In einem Sprühturm wurden mit Hilfe einer Bündeldüse aus 12 Einstoffdüsen mit je 7 Bohrungen von 1,8 mm Durchmesser (vergl. die Figuren 1 bis 3) bei verschlossenem Druckgaszuführungsrohr stündlich 9 m³ einer Natriumorthophosphatlösung mit einer $P_2O_5$-Konzentration von 30 Gew.-% und einem Na:P-Verhältnis von 1,666:1 (5:3) mit einem Vordruck von 16 bar versprüht. Die Beheizung des Sprühturmes erfolgte durch Verbrennen von Kohlenmonoxid-Gas

Es resultierten stündlich 7,5 t Produkt mit einem $Na_5P_3O_{10}$-Gehalt von 98,1% und einem Schüttgewicht von 650 g/l.

### Beispiel 2 (nach dem Stand der Technik) Beispiel 1 wurde mit der Abänderung wiederholt, daß der Natriumorthophosphatlösung pro m³ 5 kg Harnstoff (entsprechend 1,25 Gew.-%, bezogen auf $P_2O_5$) zugesetzt wurde. Es resultierten stündlich 7,5 t Produkt mit einem $Na_5P_3O_{10}$-Gehalt von 98,0% und einem Schüttgewicht von 450 g/l.

### Beispiel 3 (gemäß der Erfindung)

Beispiel 1 wurde mit der Abänderung wiederholt, daß durch das einen inneren Durchmesser von 1 mm aufweisende Druckgaszuführungsrohr stündlich 20 Nm³ Preßluft unter einem Druck von 20 bar in die Verwirbelungskammer der Bündeldüse hereingedrückt wurde.

Es resultierten stündlich 7,5 t Produkt mit hohlkugelförmiger Kornstruktur ("beads"), mit einem $Na_5P_3O_{10}$-Gehalt von 98,1% und mit einem Schüttgewicht von 340 g/l.

### Beispiel 4 (gemäß der Erfindung)

Beispiel 3 wurde mit der Abänderung wiederholt, daß die Preßluftmenge auf 38 Nm³/h erhöht wurde.

Es resultierten stündlich 7,5 t Produkt mit hohlkugelförmiger Kornstruktur ("beads"), mit einem $Na_5P_3O_{10}$-Gehalt von 98,1% und mit einem Schüttgewicht von 280 g/l.

### Beispiel 5 (gemäß der Erfindung)

In dem im Beispiel 1 beschriebenen Sprühturm wurden mit Hilfe einer Bündeldüse aus 6 Einstoffdüsen mit je 7 Bohrungen von 2,8 mm Durchmesser stündlich 9 m³ der in Beispiel 1 aufgeführten Natriumorthophosphatlösung mit einem Vordruck von 10 bar versprüht. Durch das einen inneren Durchmesser von 1 mm aufweisende Druckgaszuführungsrohr wurden gleichzeitig stündlich 38 Nm³ Preßluft unter einem Druck von 20 bar in die Verwirbelungskammer der Bündeldüse hineingedrückt. Die Beheizung des Turmes erfolgte wie im Beispiel 1 angegeben.

Es resultierten stündlich 7,5 t Produkt mit hohlkugelförmiger Kornstruktur ("beads"), mit einem $Na_5P_3O_{10}$-Gehalt von 98,0% und mit einem Schüttgewicht von 250 g/l.

### Beispiel 6 (gemäß der Erfindung)

Beispiel 5 wurde mit der Abänderung wiederholt, daß anstelle der Preßluft als permanentes Gas Stickstoff mit einem Druck von 22 bar in die Verwirbelungskammer der Bündeldüse hineingedrückt wurde.

Es resultierten stündlich 7,5 t Produkt mit hohlkugelförmiger Kornstruktur ("beads"), mit einem $Na_5P_3O_{10}$-Gehalt von 98,0% und mit einem Schüttgewicht von 238 g/l.

### Beispiel 7 (gemäß der Erfindung)

Beispiel 5 wurde mit der Abänderung wiederholt, daß anstelle von Preßluft als permanentes Gas Kohlendioxid mit einem Druck von 18 bar in die Verwirbelungskammer der Bündeldüse hineingedrückt wurde.

Es resultierten stündlich 7,5 t Produkt mit hohlkugelförmiger Kornstruktur ("beads"), mit einem $Na_5P_3O_{10}$-Gehalt von 98,1% und mit einem Schüttgewicht von 248 g/l.

### Patentansprüche

1. Verfahren zur Herstellung von hohlkugelförmigen Alkalipolyphosphaten mit niedrigem Schüttgewicht durch Versprühen von Alkaliorthophosphatlösungen mittels Einstoffdüsen bei Vordrucken der Alkaliphosphatlösungen von 6 bis 40 bar in einem Sprühtrum durch eine Flammenzone, dadurch gekennzeichnet, daß man ein unter einem höheren Druck als die Alkaliphosphatlösungen stehendes permanentes Gas in feinperliger Form in eine mit den Alkaliphosphatlösungen gefüllte und mit den Einstoffdüsen strömungsmäßig verbundene Verwirbelungszone preßt.

2. Verfahren nach Anspruch 1, dadurch gekennzeichnet, daß man als permanentes Gas Preßluft verwendet.

3. Verfahren nach Anspruch 1, dadurch gekennzeichnet, daß man als permanentes Gas Kohlendioxid verwendet.

4. Verfahren nach Anspruch 1, dadurch gekennzeichnet, daß man als permanentes Gas Stickstoff verwendet.

5. Verfahren nach einem der Ansprüche 1 bis 4, dadurch gekennzeichnet, daß der Druck des permanenten Gases mindestens 20% höher als der Vordruck der Alkaliphosphatlösungen ist.

6. Verfahren nach einem der Ansprüche 1 bis 5, dadurch gekennzeichnet, daß man 1,5 bis 40 Nm³, vorzugsweise 2 bis 6 Nm³, permanentes Gas pro m³ Alkaliphosphatlösung anwendet.

7. Anlage zur Durchführung des Verfahrens nach den Ansprüchen 1 bis 6, bestehend aus einem mit einem Deckel verschlossenen, zylindrischen Sprühturm, wobei der Deckel mittig von einem mit einer Versprüheinrichtung verbundenen Lösungszuführungsrohr sowie von einer Brennereinrichtung durchdrungen ist, dadurch gekennzeichnet, daß die Versprüheinrichtung (6) aus einem Lösungseintrittsrohr (8) und einem daran befestigten Konus (9) besteht, wobei in den unteren Teil des Konus (9) mittig ein kegelförmiger Verdrängerkörper (10) unter Ausbildung einer Verwirbelungskammer (12) eingesetzt ist; daß der Konus (9) nach unten hin durch eine Kreisplatte (13) verschlossen ist; daß in die Kreisplatte (13) im Bereich der Verwirbelungskammer (12) mehrere Zuleitungen (14) mit an ihren entgegengesetzten Enden angeordneten Einstoffdüsen (15) unter Ausbildung einer Bündeldüse (3) eingesetzt sind; und daß in die Verwirbelungskammer (12) tangential ein Druckgaszuführungsrohr (4) einmündet.

8. Anlage nach Anspruch 7, dadurch gekennzeichnet, daß jede Einstoffdüse (15) 5 bis 9, vorzugsweise 7, Bohrungen aufweist.

9. Anlage nach Anspruch 8, dadurch gekennzeichnet, daß jede Bohrung einen Durchmesser von 0,5 bis 4 mm aufweist.

10. Anlage nach einem der Ansprüche 7 bis 9, dadurch gekennzeichnet, daß die Bündeldüse (3) aus 6 bis 14 Einstoffdüsen (15) besteht.

11. Anlage nach einem der Ansprüche 7 bis 10, dadurch gekennzeichnet, daß das Druckgaszuführungsrohr (4) einen Durchmesser von 0,3 bis 4 mm aufweist.

**Revendications**

1. Procédé pour la fabrication de polyphosphates alcalins sous forme de perles creuses de faible densité apparente par pulvérisation de solutions d'orthophosphates alcalins au moyen de buses à une substance sous des pressions d'alimentation des solutions de phosphates alcalins de 6 à 40 bar dans une tour de pulvérisation à travers une zone de flammes, caractérisé en ce que l'on injecte un gaz permanent sous une pression supérieure à celle des solutions de phosphates alcalins sous forme de perles fines dans une zone tourbillonnaire remplie avec les solutions de phosphates alcalins et reliée dans le sens de l'écoulement à des buses à une substance.

2. Procédé selon la revendication 1, caractérisé en ce que l'on utilise de l'air sous pression comme gaz permanent.

3. Procédé selon la revendication 1, caractérisé en ce que l'on utilise du dioxyde de carbone comme gaz permanent.

4. Procédé selon la revendication 1, caractérisé en ce que l'on utilise de l'azote comme gaz permanent.

5. Procédé selon l'une des revendications 1 à 4, caractérisé en ce que la pression du gaz permanent est supérieure d'au moins 20% à la pression d'alimentation des solutions de phosphates alcalins.

6. Procédé selon l'une des revendications 1 à 5, caractérisé en ce que l'on utilise 1,5 à 40 Nm³, de préférence 2 à 6 Nm³, de gaz permanent par m³ de solution de phosphate alcalin.

7. Installation pour la mise en oeuvre de procédé selon les revendications 1 à 6, consistant en une tour de pulvérisation cylindrique fermée par un couvercle, le couvercle étant traversé en son milieu par un tube d'amenée de solution reliée à un dispositif de pulvérisation et par un système de brûleurs, caractérisée en ce que le dispositif de pulvérisation (6) consiste en un tube d'entrée de solution (8) et un cône (9) fixé à celui-ci, un élément volumétrique conique (10) étant inséré dans le milieu de la partie inférieure du cône (9) avec formation d'une chambre tourbillonnaire (12); en ce que le cône (9) est fermé dans le bas par une plaque circulaire (13); en ce que plusieurs conduites d'admission (14) sont introduites dans la plaque circulaire (13) dans la région de la chambre tourbillonnaire (12), comportant à leurs extrémités opposées des buses à une substance (15) formant un faisceau de buses (3); et en ce qu'un tube d'amenée de gaz sous pression (4) débouche tangentiellement dans la chambre tourbillonnaire (12).

8. Installation selon la revendication 7, caractérisée en ce que chaque buse à une substance (15) présente 5 à 9 orifices, de préférence 7.

9. Installation selon la revendication 8, caractérisée en ce que chaque orifice a un diamètre de 0,5 à 4 mm.

10. Installation selon l'une des revendications 7 à 9, caractérisée en ce que le faisceau de buses (3) consiste en 6 à 14 buses à une substance (15).

11. Installation selon l'une des revendications 7 à 10, caractérisée en ce que le tube d'amenée de gaz sous pression (4) à un diamètre de 0,3 à 4 mm.

**Claims**

1. A process for producing alkali metal polyphosphates of low bulk density in the form of hollow spheres by spraying alkali metal orthophosphate solutions by means of one-component nozzles under upstream pressures of the alkali metal phosphate solutions of from 6 to 40 bar into a spray tower through a flame zone, which comprises injecting a permanent gas, which is under a higher pressure than the alkali metal phosphate solutions, in the form of fine bubbles into a turbulence-creating zone filled with the alkali metal phosphate solutions and flow-connected to the one-component nozzles.

2. The process as claimed in claim 1, wherein compressed air is used as the permanent gas.

3. The process as claimed in claim 1, wherein carbon dioxide is used as the permanent gas.

4. The process as claimed in claim 1, wherein nitrogen is used as the permanent gas.

5. The process as claimed in any of claims 1 to 4, wherein the pressure of the permanent gas is at least 20% higher than the upstream pressure of the alkali metal phosphate solutions.

6. The process as claimed in any of claims 1 to 5, wherein 1.5 to 40 $m^3$ (S.T.P.), preferably 2 to 6 $m^3$ (S.T.P.), of permanent gas are used per $m^3$ of alkali metal phosphate solution.

7. An apparatus for carrying out the process as claimed in any of claims 1 to 6, consisting of a cylindrical spray tower closed by a cover, the cover being centrally penetrated by a solution feed pipe connected to a spraying device and being penetrated by a burner device, wherein the spraying device (6) consists of a solution inlet pipe (8) and a cone (9) fixed thereto, a conical displacement body (10) being inserted into the center of the lower part of the cone (9) to form a turbulence-creating chamber (12), and wherein the cone (9) is closed downwards by a circular plate (13), and wherein a plurality of feed pipes (14) with one-component nozzles (15) fitted to their opposite ends being inserted into the circular plate (13) in the region of the turbulence-creating chamber (12) to form a nozzle bundle (3), and wherein a pressurized-gas feed pipe (4) leads tangentially into the turbulence-creating chamber (12).

8. The apparatus as claimed in claim 7, wherein each one-component nozzle (15) has 5 to 9 orifices, preferably 7 orifices.

9. The apparatus as claimed in claim 8, wherein each orifice has a diameter of from 0.5 to 4 mm.

10. The apparatus as claimed in any of claims 7 to 9, wherein the nozzle bundle (3) comprises 6 to 14 one-component nozzles (15).

11. The apparatus as claimed in any of claims 7 to 10 wherein the pressurized-gas feed pipe (4) has a diameter of from 0.3 to 4 mm.

FIG.1

FIG. 2

FIG. 3

2